**Europäisches Patentamt**

**European Patent Office**

**Office européen des brevets**

(11) Numéro de publication: **0 016 672**

**A1**

(12) ## DEMANDE DE BREVET EUROPEEN

(21) Numéro de dépôt: **80400230.1**

(22) Date de dépôt: **19.02.80**

(51) Int. Cl.³: **H 04 Q 3/00**
**H 04 M 19/02**

(30) Priorité: **12.03.79 FR 7906223**

(43) Date de publication de la demande:
**01.10.80 Bulletin 80/20**

(84) Etats Contractants Désignés:
**BE CH DE GB IT NL SE**

(71) Demandeur: **Société anonyme dite:**
**JEUMONT-SCHNEIDER**
**31-32, Quai National**
**F-92806 Puteaux(FR)**

(72) Inventeur: **Dumont, Alain**
**rue Henri Barbusse**
**F-71230 Saint-Vallier Saône et Loire(FR)**

(74) Mandataire: **Paume, André et al,**
**31-32, Quai National**
**F-92806 Puteaux(FR)**

(54) **Dispositif d'appel pour installation téléphonique automatique d'abonné avec postes supplémentaires.**

(57) Le dispositif d'appel comprend un générateur de signal alternatif et un générateur de courant continu reliés à une ligne d'injection du signal d'appel, ainsi qu'un circuit centralisé de détection de boucle (11), en série dans la ligne (12) et un interrupteur (7), et, en série dans la ligne de transmission de chaque poste supplémentaire, un circuit local de détection de boucle (31, 32) et un contact bidirectionnel (41, 42...).

Lors de la fermeture d'une boucle, l'interrupteur (7) ouvre le circuit du signal alternatif, et la ligne de transmission bouclée, précédemment raccordée à la ligne d'injection (12), est raccordée au réseau de connexion (13) de l'installation, avant que l'interrupteur (7) ne referme le circuit.

Application: Téléphonie.

EP 0 016 672 A1

./...

Croydon Printing Company Ltd.

1

# DISPOSITIF D'APPEL POUR INSTALLATION TELEPHONIQUE AUTO-MATIQUE D'ABONNE AVEC POSTES SUPPLEMENTAIRES.

La présente invention concerne un générateur de signal de sonnerie centralisé, utilisable notamment dans une installation automatique et électronique d'abonné avec postes téléphoniques supplémentaires, et plus particulièrement un dispositif d'appel mettant en oeuvre un tel générateur.

De façon générale, les installations téléphoniques automatiques et électroniques incluent un générateur de signal de sonnerie centralisé à courant alternatif de basse fréquence mais de tension relativement élevée. Ce signal est appliqué sélectivement au poste supplémentaire appelé, après détection de son état, et est arrêté dès que le demandé correspondant a décroché son combiné.

De nombreux brevets, par exemple les brevets français 2 329 126, 2 366 756 et 2 368 845 proposent diverses solutions pour de tels circuits. Toutefois, ces dispositifs présentent l'inconvénient de nécessiter de nombreux composants électroniques, ce qui en augmente le coût et en diminue sensiblement la fiabilité de fonctionnement.

Le but de la présente invention est d'obvier à cet inconvénient à l'aide d'un circuit d'une grande simplicité.

Selon l'invention, le dispositif d'appel utilisable dans une installation téléphonique automatique d'abonné avec postes supplémentaires, commandée à l'aide d'une unité centrale de traitement, comprend un générateur de signal alternatif de sonnerie et un générateur de courant continu reliés à une ligne d'injection du signal d'appel, ainsi que, en combinaison:

— un circuit centralisé de détection de boucle disposé en série dans la ligne d'injection et dont le signal de sortie est appliqué à un circuit de commande d'un interrupteur ouvrant le circuit du signal alternatif lorsque le passage d'un courant continu dans la ligne d'injection est détecté par le circuit centralisé,

— en série dans la ligne de transmission de chaque poste supplémentaire, un circuit local de détection de boucle informant l'unité centrale de traitement de l'état dudit poste supplémentaire, et un contact bidirectionnel commandé par l'unité centrale de traitement, de telle manière que la ligne de transmission soit connectée, soit au réseau de connexion, soit à la ligne d'injection,

de telle sorte que, de la fermeture de l'une quelconque des boucles, résultent simultanément l'ouverture de l'interrupteur, le raccordement de la ligne de transmission bouclée au réseau de connexion et, consécutivement, la fermeture à nouveau de l'interrupteur.

Ce dispositif peut comporter, en outre, un détecteur de passage à zéro du signal alternatif, disposé en série entre le générateur de signal alternatif et l'interrupteur, dont le signal de sortie est appliqué au circuit de commande, de manière que l'interrupteur ne puisse être fermé que lors du passage à zéro du signal alternatif, ainsi qu'un limiteur de courant alternatif disposé en série entre le générateur de courant alternatif et l'interrupteur.

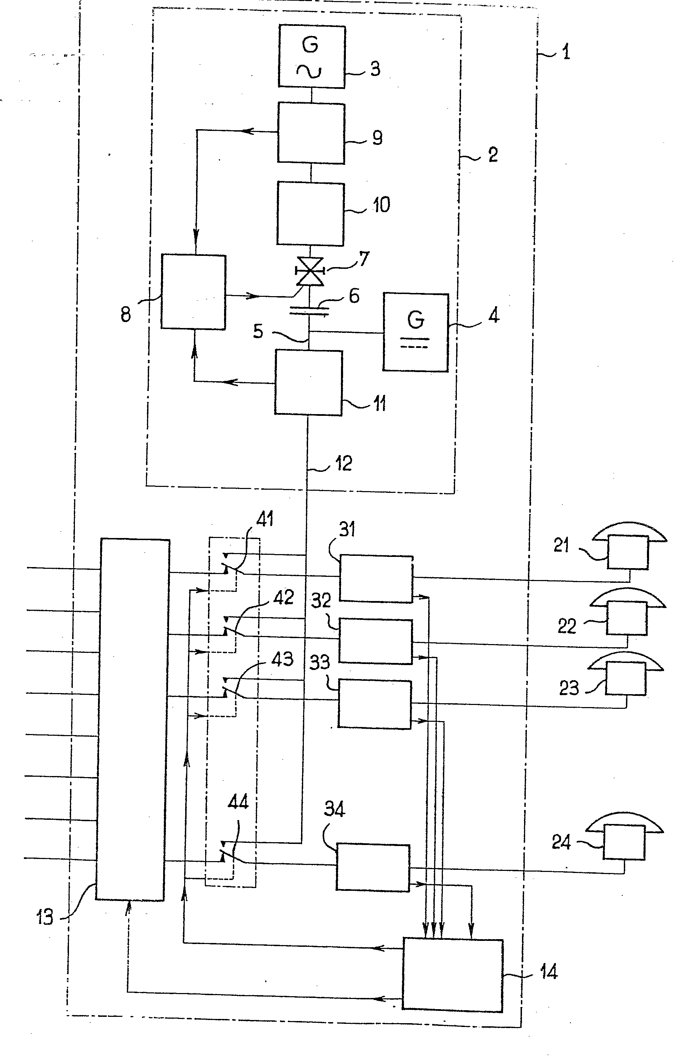

L'invention sera mieux comprise et d'autres buts, avantages et caractéristiques apparaîtront plus clairement à la lecture de la description qui suit, en regard au dessin annexé d'un mode de réalisation de l'invention.

La figure unique représente schématiquement une installation d'abonné avec postes supplémentaires incluant un dispositif d'appel conforme à l'invention.

Sur cette figure, l'installation d'abonné avec postes supplémentaires est représentée dans un encadrement en tracé mixte sous la référence 1, et la partie centralisée du dispositif de l'invention est généralement représentée dans un encadrement en tracé mixte, mais sous la référence 2.

3

Cette partie centralisée comporte un générateur de courant alternatif 3 de basse fréquence, généralement de 50 Hz, et de tension relativement élevée, par exemple 70 volts, ainsi qu'un générateur de courant continu 4 fournissant par exemple 50 milliampères sous 48 volts. Ces deux courants sont appliqués à la ligne 5, un condensateur 6 évitant au courant continu de circuler vers le générateur de courant alternatif 3.

Un interrupteur électronique bidirectionnel 7, commandé par un circuit 8 incluant une bascule astable ou monostable permettant de moduler par tout ou rien le signal alternatif par exemple 3, 3s de signal suivi de 1,6s de relaxation et ainsi de suite, commande l'application sur la ligne 5 du courant alternatif de sonnerie. Un circuit 9 permet la détection du passage par zéro de la tension du signal alternatif, de telle façon que l'ouverture de l'interrupteur 7 n'intervienne que lorsque la tension du signal alternatif est nulle, ce qui permet d'éviter d'engendrer des signaux parasites dans le circuit. Dans ce but, le signal de sortie de ce circuit 9 est appliqué à l'une des entrées du circuit de commande 8 de l'interrupteur 7.

De façon préférée, un circuit 10 de limitation de courant est inséré dans le circuit du signal alternatif, de façon à limiter le courant engendré en cas de court-circuit et à protéger les divers composants du dispositif. Un détecteur centralisé de boucle 11 permet de détecter la fermeture d'une boucle, c'est-à-dire le décrochage d'un poste supplémentaire; ce détecteur détecte en fait le passage d'un courant continu lorsqu'un circuit est fermé pour ce courant, par exemple lors du décrochage du combiné d'un poste supplémentaire appelé. Dès que le passage d'un courant continu est détecté dans la ligne d'injection 5 ou 12, le détecteur 11 applique au circuit de commande 8 de l'interrupteur 7 un signal correspondant à un ordre d'ouverture de l'interrupteur 7, de manière que le signal de sonnerie ne soit plus injecté dans la ligne 12. Dès que le circuit de sonnerie du poste appelé est ouvert, le détecteur 11 libère le circuit de commande 8 qui reprend alors son fonctionnement normal, puisqu'aucune circulation de courant continu n'est alors plus détectée par le détecteur 11. Le signal composite de sonnerie est appliqué par l'intermédiaire de la ligne 12 et de contacts bidirectionnels aux lignes de transmission des postes supplémentaires à appeler.

Pour simplifier la figure, seuls quatre postes supplémentaires 21,22,23 et 24 ont été représentés. Insérés dans la ligne de transmission de chacun des postes, sont disposés un détecteur local de fermeture de boucle - 31, 32,33,34 - et un contact bidirectionnel - 41,42,43 44 - permettant de connecter chaque ligne provenant d'un poste supplémentaire, soit à la ligne 12 pour diriger un signal de sonnerie, soit au réseau de connexion 13 lors de la fermeture de la boucle.

L'unité centrale de traitement 14 qui assure la commande du réseau de connexion 13 commande en outre, sélectivement, les contacts bidirectionnels 41,42,43,44.

Le fonctionnement du dispositif est alors très simple. La partie centralisée 2 fonctionne en permanence. Lorsque l'unité centrale de traitement 14 reçoit, par la numérotation au cadran d'un poste téléphonique demandeur, l'ordre d'appeler l'un des postes supplémentaires, par exemple le poste 21, deux solutions se présentent: soit le poste est déjà en état de boucle fermée, et le détecteur local 31 informe l'unité centrale 14 qu'aucun signal de sonnerie ne doit être transmis. Le contact 41 reste alors dans sa direction première vers le réseau de connexion et la ligne de transmission correspondante n'est pas perturbée. L'unité centrale 41 donne alors l'ordre d'émettre un signal d'occupation à l'intention du poste demandeur.

Si le poste à appeler 21 n'est pas occupé, le détecteur de boucle 31 ne détecte aucune boucle fermée et l'unité centrale 14 commande alors le changement de direction du contact 41. La ligne de transmission correspondante est, de ce fait, connectée à la ligne 12. En l'absence de boucle fermée, seul le signal alternatif est transmis au poste supplémentaire 21 à appeler, ce signal étant modulé convenablement par les circuits de la partie centralisée 2. Lorsque le combiné du poste 21 est décroché, il se forme une boucle dans laquelle va circuler un courant continu immédiatement détecté par le détecteur centralisé 11. Ce dernier applique alors un signal au circuit de commande 8 pour ouvrir l'interrupteur 7 et, par suite, arrêter l'application du signal alternatif à la ligne 12. Le détecteur local de boucle 31 informe l'unité centrale de traitement 14 de la fermeture de la boucle du poste correspondant 21, cette dernière commandant alors le basculement du contact 41 de manière à débrancher le circuit d'injection de sonnerie et à connecter la ligne du poste téléphonique demandé, par l'intermédiaire du réseau 13 à la ligne du poste demandeur.

La circulation du courant continu en provenance du générateur 4 est, de ce fait, interrompue, et le détecteur centralisé 11 en informe le circuit de commande 8 de l'interrupteur 7 qui se referme dès que la tension du signal issu du générateur de courant alternatif 3 passe par zéro, si le circuit de commande 8 le lui autorise. A ce moment là, le signal de sonnerie est à nouveau émis dans la ligne 12, prêt à être appliqué à un quelconque poste supplémentaire libre et demandé, par l'intermédiaire du contact bidirectionnel correspondant.

Si plusieurs postes supplémentaires doivent être appelés simultanément, le circuit centralisé de détection de boucle 11 stoppe l'émission du signal alternatif de sonnerie pour tous les postes appelés lorsque le combiné de l'un des postes appelés est décroché puisque le détecteur centralisé 7 détecte alors le passage d'un courant continu dans la ligne 12. L'injection du signal

6

de sonnerie est alors suspendue pendant que le cycle précédemment décrit s'effectue. Mais les contacts bidirectionnels des autres postes appelés n'ayant pas, pendant ce temps, changé de direction, le signal de sonnerie est à nouveau appliqué aux postes appelés dont le combiné n'a pas été décroché dès que l'interrupteur 7 est refermé.

L'interruption de l'émission du signal de sonnerie dure environ 30 à 40 millisecondes, ce qui n'est pas perceptible à l'oreille humaine.

Bien que seul un mode de réalisation de l'invention ait été décrit, il est évident que toute modification apportée par l'Homme de l'Art dans l'esprit de l'invention ne sortirait pas du cadre de l'invention. En particulier, le signal alternatif de sonnerie peut être de n'importe quel type, par exemple du type à fréquence élevée et faible tension si les postes supplémentaires sont équipés d'amplificateurs appropriés.

## REVENDICATIONS

1.- Dispositif d'appel utilisable notamment dans une installation téléphonique automatique d'abonné avec postes supplémentaires, commandée à l'aide d'une unité centrale de traitement, ledit dispositif incluant un générateur de signal alternatif de sonnerie et un générateur de courant continu reliés à une ligne d'injection du signal d'appel, caractérisé en ce qu'il comporte, en combinaison:

— un circuit centralisé de détection de boucle(11) disposée en série dans ladite ligne d'injection(12), et dont le signal de sortie est appliqué à un circuit de commande (8) d'un interrupteur (7) ouvrant le circuit du signal alternatif lorsque le passage d'un courant continu dans la ligne d'injection (12) est détecté par ledit circuit centralisé (11),

— en série dans la ligne de transmission de chaque poste supplémentaire (21,22), un circuit local de détection de boucle (31,32..) informant l'unité centrale de traitement (14) de l'état dudit poste supplémentaire, et un contact bidirectionnel (41,42 ..) commandé par l'unité centrale de traitement (14), de telle manière que ladite ligne de transmission soit connectée, soit au réseau de connexion (13), soit à la ligne d'injection (12), de telle sorte que, de la fermeture de l'une quelconque des boucles, résultent simultanément l'ouverture dudit interrupteur (7), le raccordement de la ligne de transmission bouclée au dit réseau de connexion (13), et, consécutivement, la fermeture à nouveau dudit interrupteur (7).

2.- Dispositif selon la revendication 1, caractérisé en ce qu'il comprend en outre un détecteur (9) de passage à zéro du signal alternatif, disposé en série entre ledit générateur du signal alternatif (3) et ledit interrupteur (7), dont le signal de sortie est appliqué audit circuit de commande (8), de manière que ledit interrupteur (7) ne puisse être fermé que lors du passage à zéro dudit signal alternatif.

3.- Dispositif selon la revendication 1 ou 2, caractérisé en ce qu'il comprend en outre un limiteur de courant alternatif (10) disposé en série entre ledit générateur alternatif (3) et ledit interrupteur (7).

0016672

0016672

Office européen
des brevets

RAPPORT DE RECHERCHE EUROPEENNE

Numéro de la demande

EP 80 40 0230

| Catégorie | Citation du document avec indication, en cas de besoin, des parties pertinentes | Revendication concernee |
|---|---|---|
| | FR - A - 2 382 818 (JEUMONT-SCHNEIDER)<br><br>* Page 3, lignes 4-27 *<br><br>-- | 1 |
| D | FR - A - 2 368 845 (SOCIETE FRAN-CAISE DES TELEPHONES ERICSSON)<br><br>* Page 2, lignes 27-35; page 5, lignes 13-26; page 6, lignes 12-16 *<br><br>-- | 1,2 |
| | DE - A - 2 335 222 (INTERNATIONAL STANDARD ELECTRIC)<br><br>* Page 10, ligne 13 - page 13, ligne 4 *<br><br>---- | 1,3 |

**CLASSEMENT DE LA DEMANDE (Int. Cl**

H 04 Q 3/00
H 04 M 19/02

**DOMAINES TECHNIQUES RECHERCHES (Int. Cl.**

H 04 M 19/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 12-06-1980 | VERSLYPE |

OEB Form 1503.1 06.78